Europäisches Patentamt

European Patent Office

Office européen des brevets

(11) Publication number: **0 176 125**
A1

# (12) EUROPEAN PATENT APPLICATION

(21) Application number: 85201388.7

(22) Date of filing: 04.09.85

(51) Int. Cl.⁴: **F 16 B 47/00**
A 47 G 1/17, H 02 G 3/26
F 16 L 3/02

(30) Priority: 05.09.84 NL 8402704

(43) Date of publication of application:
02.04.86 Bulletin 86/14

(84) Designated Contracting States:
AT BE CH DE FR GB IT LI LU NL SE

(71) Applicant: Tijgerplastics Beheer B.V.
Winde 3
NL-5660 AA Geldrop(NL)

(72) Inventor: Alberts, Thomas Johannes A. J.
Boekentveld 21
NL-4847 SV Teteringen(NL)

(74) Representative: Noz, Franciscus Xaverius, Ir. et al,
Algemeen Octrooibureau P.O. Box 645
NL-5600 AP Eindhoven(NL)

(54) Object to be mounted on a supporting surface.

(57) Object (1,5,10,14,18,22,30,45,45') to be mounted on a supporting surface, for example a wall, which object is a fixing element, conductor, hose or similar to which is bonded a film (2,4,9,15,21,2',46) protruding from the object and which can be adhered to the supporting surface, whereby the film contains openings, pores, recesses or similar, which are suitable for the absorption of adhesive.

FIG.1.

0176125

-1-

Brief Definition : Object to be mounted on
a supporting surface.

The invention relates to an object to be mounted
on a supporting surface, for example a wall, which object is
a fixing element, conductor, hose or similar to which
is bonded a film protruding out of the object and
which can be adhered to the supporting surface.

Such an object is known from the American patent
specification 2.765.998. As this publication shows,
it is already known for many years that a film
made of plastic or a material covered with plastic
is used for mounting a fixing element on a supporting
surface. The surface of such a film is closed and
particularly smooth and in practice it has been shown
that acceptable adhesion can only be obtained on
an equally smooth supporting surface.

According to the invention the film has openings,
pores, recesses or similar, which are suitable for
absorption of adhesive. By using the construction
according to the invention a better cohesion is obtained
between the adhesive and material forming the film,
as a result of which it has surprisingly been shown
that such a design is also highly suitable for
application on less even surfaces.

The film preferably consists of a woven material or a gauze-type material. Such a material is particularly good for application to uneven surfaces, since this material can easily follow the unevennesses, so that a particularly good bond will be obtained, so that a high adhesive strength can be obtained even with relatively small dimensions, so that even heavy objects can be suspended.

It is noted that it is already known for many years from the French patent specification 1.117.651 that a piece of fabric is applied to the reverse of a fixing element.

This piece of fabric is however supported over its' whole surface by the fixing element in question and does not protrude outside of the fixing element, as a result of which a good adaptation of the woven material to the unevennesses of the supporting surface cannot be obtained with this design.

On application of the invention, use is made in preference of known, easily removed types of adhesive so that, if the fixing element is no longer required at the place where it is mounted, the fixing element with the flexible film can be easily removed without damage being caused to the supporting surface, for example a wall. Nor should any traces of adhesive be left on the wall, as film and adhesive form a detachable whole.

The invention will be explained further below by means of various embodiments of fixing elements according to the invention, shown in the accompanying drawings.

Fig. 1 shows diagrammatically in perspective a first embodiment of a fixing element according to the invention.

Fig. 2 shows diagrammatically in perspective a second embodiment of a fixing element according to the invention.

Fig. 3 shows diagrammatically in perspective a

third embodiment of a fixing element according to the invention with parts thereof being shown at a distance from each other.

Fig. 4 shows diagrammatically in perspective a fourth embodiment of a fixing element according to the invention.

Fig. 5 shows a view of parts of a fifth embodiment of a fixing element according to the invention, whereby these parts are joined together by means of connecting elements formed during the moulding of the parts.

Fig. 6 shows a top view of fig. 5.

Fig. 7 shows in perspective a view of a further embodiment of a fixing element.

Fig. 8 shows a section through a part of the fixing element shown in fig. 7.

Fig. 9 shows a part of fig. 8 on a larger scale.

Fig. 10 shows a bottom view of fig. 9 without the film serving for bonding.

Fig. 11 shows a section corresponding with fig. 8 with parts of the fixing element in another position.

Fig. 12 shows a detail of a further embodiment of the construction according to the invention.

Fig. 13 shows an object formed by a conductor fixed to a film.

Fig. 14 shows a side view of fig. 13.

Fig. 15 shows a film with various conductors mounted thereon.

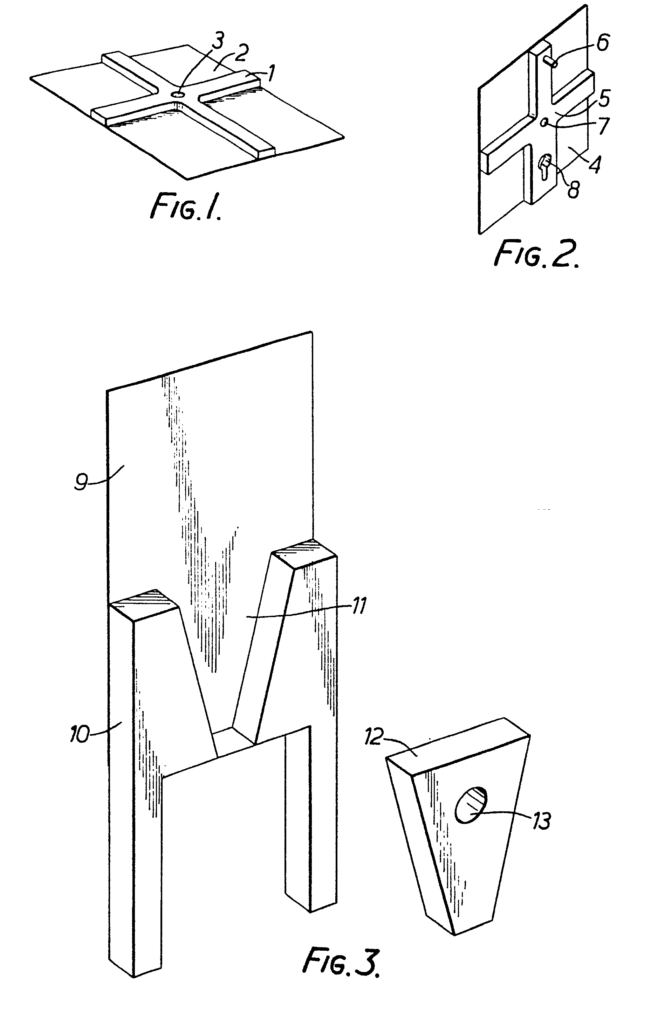

The fixing element illustrated in fig. 1 is formed by a cross-shaped fixing element 1, which is manufactured for example from plastic or similar material and adhered to a film 2 manufactured from flexible material. The film 2 can for example be manufactured from linen or canvas or from a gauze-type material. The film may be manufactured from synthetic or natural fibres. It may also be possible for so-called non-woven materials to be used for the film.

It is also possible to incorporate a flexible reinforcement in the fixing element 1, which is preferably manufactured from plastic or similar material, during the moulding of the fixing element 1. The fixing element 1 should preferably be moulded on the film 2, as a result of which a particularly good adhesion should be obtained between the fixing element 1 and the film 2.

In the embodiment shown there is a hole 3 provided in the centre of the cross-shaped fixing element 1, in which, for example, a screw, a suspension hook or similar can be secured.

The fixing element 1 can be secured to a surface, for example a brick wall or similar, whereby the film 2 is smeared over with a suitable adhesive, which adhesive by the nature of the film-like material can also penetrate into the pores or openings bordered by the fibres from which the film 2 is manufactured. An excellent bonding will therefore be obtained between the adhesive and the film 2.  Furthermore, the film 2 can by virtue of its flexible nature adapt well to any unevennesses in the supporting surface to which the film 2 is applied, such that a firm connection will so be achieved with the aid of the adhesive between the film 2 and the supporting surface and thus between the supporting surface and the fixing element.

The film may also be provided with a self-adhesive coating during its manufacture, which coating will often be provided with a protective covering for the purposes of transport and storage.

There are of course a number of conceivable variations of the previously described embodiment of the fixing element and film joined to the fixing element.

So fig. 2 shows an embodiment whereby a cross-shaped fixing element 5 joined to a film 4 is provided with a projecting pin 6, a hole 7 located at the centre of this cross-shaped fixing element and a hole 8 having the form of a keyhole. In the part of the latter hole having the widest section it is possible to insert, for example, the head of a screw, which screw can then be pushed downwards so that the head lies sandwiched between the front wall of the cross-shaped fixing element 5 and the film 4 at the level of that part of the hole 8 having the narrowest section. The centrally located hole 7 can be used in a similar way to the hole 3, whilst the pin 6 may also be used for the attachment of the elements or similar to be suspended. Other arrangements of the holes and/or pins are of course possible.

Fig. 3 shows an embodiment whereby the uppermost piece of an essentially H-shaped part 10 of the fixing element is fixed to a film 9 manufactured from flexible material. As illustrated in fig. 3, the top parts of the legs of the H-shaped part 10 define an opening 11 tapering downwards. The upright walls defining the opening 11 thereby extend obliquely outwards from the film, in a direction towards each other. Into said opening 11 fits a correspondingly shaped part 12 of the fixing element whereby such part 12 can be inserted from above into the opening 11. In the embodiment illustrated there is a hole 13 provided in part 12 for the insertion of a screw or similar. It will however be clear that part 12 may also be provided with other means, such as projecting pins, hook-shaped parts or similar for the suspension of objects or the like from the fixing element.

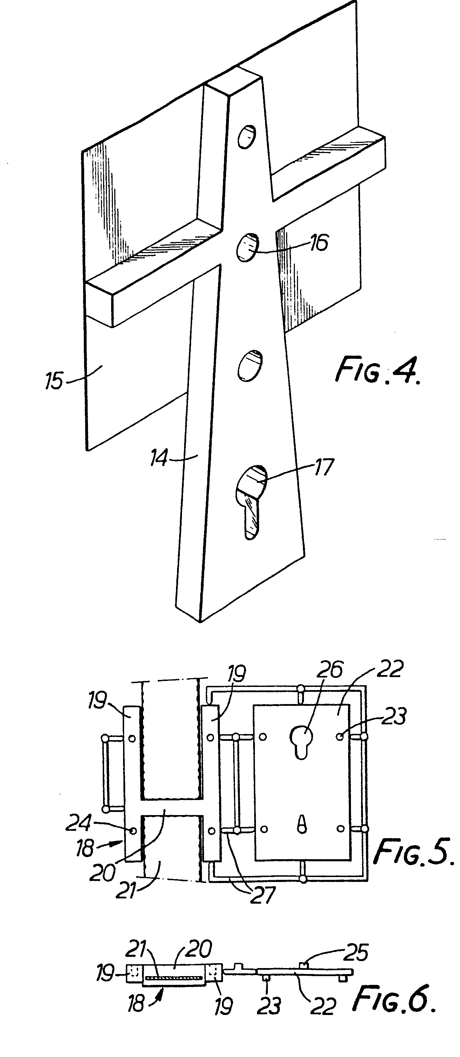

In the embodiment illustrated in fig. 4 fixing elements are formed by a cross-shaped part 14, which is secured to a flexible film 15 in such a way that the bottommost section of the vertically upright leg of the cross-shaped section 14 projects underneath the film 15. In the embodiment illustrated there are several round holes 16 and one keyhole-shaped hole 17 provided in the cross-shaped fixing element, which are intended for the insertion of, for example, bolts or hooks by which objects can be suspended from the fixing element.

In the embodiment illustrated in fig. 5 the fixing element comprises a first, essentially H-shaped section 18, which is made from two legs extending parallel to each other and a centre piece 20 joining said legs 19.

This part 18 of the fixing element is secured to a ribbon-like film 21 manufactured from flexible material, which extends between the legs and through the middle section 20. This connecting section 18 is manufactured for example from plastic by injection moulding, whereby the material forming the centre section 20 is simultaneously injected around the ribbon-like film 21, so that on the moulding of part 18 of the fixing element firm bond is achieved at the same time with the ribbon-like film 21.

The fixing element comprises a second plate-like section 22, which on the one side is provided with four projecting pins 23, fitting by means of press fit into the legs 19 of the holes 24 recessed in part 18.

On the remote side of the plate-shaped part 22 from the pins 23, a projecting hook 25 is formed, whilst a keyhole shaped hole 26 is recessed at a further place on the plate-shaped part.

As shown in fig. 5 parts 18 and part 22 are joined together by a number of connecting strips 27, which are formed during the injection moulding of both parts 18 and 22 in a single mould.

Preferably, a large number of such fixing elements consisting of the parts 18 and 22 are moulded onto a length of ribbon-like film 21 and, if a fixing element is required for use, the appropriate portion of the length of ribbon 21 can be cut off.

Subsequently the parts 18 and 22 can be separated from each other by breaking off the connecting strips and, when the flexible section of the ribbon-like element 21 joined to the corresponding part 18 has been adhered to the supporting surface, the plate-like section 22 can be fixed to the part 18 by pressing the pins 23 into the holes 24. The hook-shaped section 25 or the keyhole-shaped opening 26 can be used for example for the suspension of objects from the fixing element.

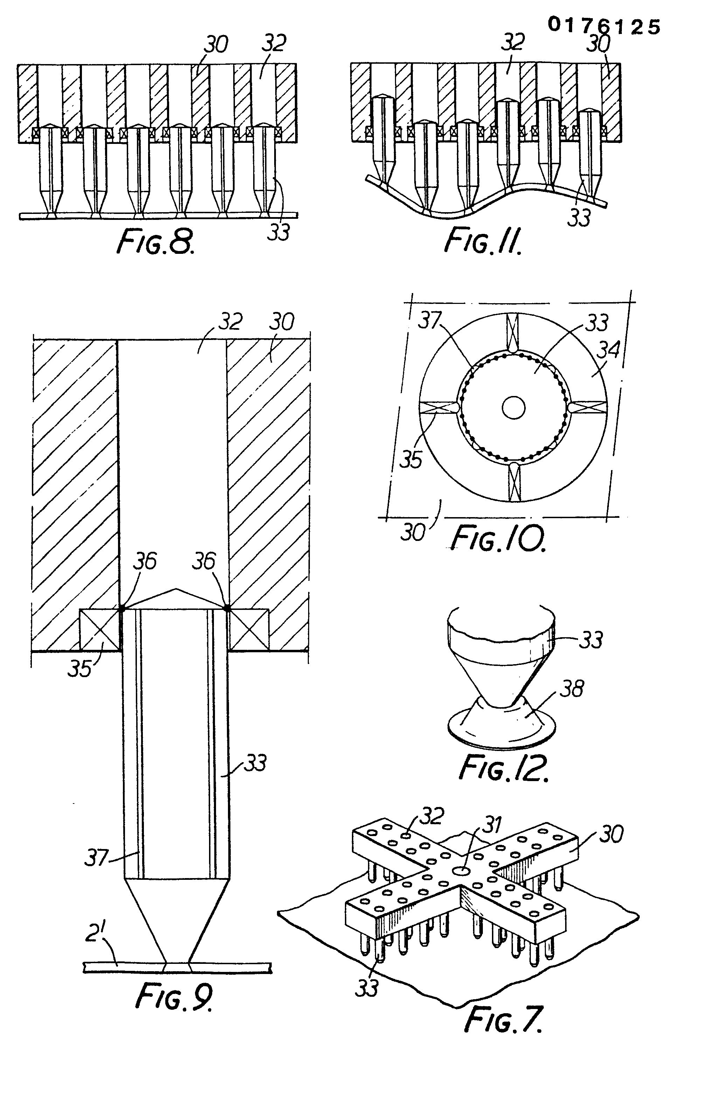

The fixing element shown in fig. 7 comprises a cross-shaped body 30 of plastic, provided with a central hole 31, for example for the accomodation of a suspension hook or similar and a large number of holes 32 in which pins 33 are accomodated.

In the initial situation the tapering ends of the pins are all on the same level and fixed to a film 21, which is intended to be bonded to a surface in the same way as described above for the previous embodiment.

Preferably, the body 30 and the pins 32 are manufactured simultaneously by injection moulding from a suitable plastic, whereby, as shown in more detail in fig. 9 and 10, the top ends of the pins are about at the same level as a recess 34 made in the material of the body surrounding the pin, which recess is provided with four radially extending guide ribs 35, of which the bounding edges facing the pin 33 extend parallel to and at a short distance from the pin. The top edge of the pin joins the body 30 via easily breakable wall sections 36. There are also several protruding ribs 37 provided on the external circumference of the pin 33, which extend in the longitudinal direction of the pin.

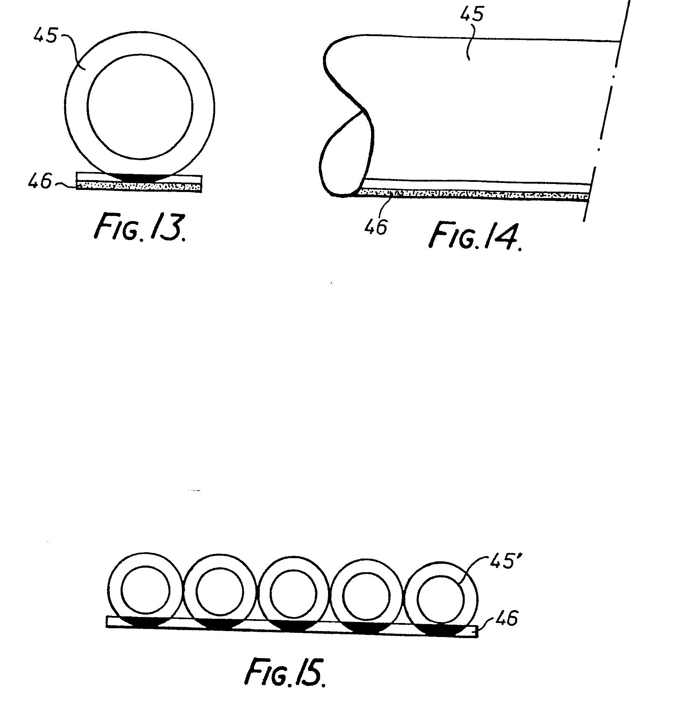

Such a construction is particularly suitable for the mounting of the fixing element on very uneven surfaces. As shown in fig. 11, the film 2' is pressed onto a corresponding surface and a force is exterted on the body 30 in the direction of the supporting surface. As sson as a part of the film comes into contact with the supporting surface, the pin incorporated is pressed into the body 30, breaking through the connecting walls 36. The pins are thereby guided through the first part of their movement with respect to the body by the ribs 35. The projecting ridges 37 ultimately bring about an excellent clamped connection between the pins 33 and the body 30. It will be clear that, at the moment when the body 30 lies at one or several points against the supporting surface, the various pins can be pressed into the body over various distances, while the film 2' ensuring fixing to the supporting surface is pressed in an effective manner onto the irregularly formed supporting surface.

As shown further in fig. 12, according to a further embodiment of the invention a suction cup 38 can be fitted to each pin 33 instead of a film for bonding to the supporting surface.

The use of such suction cups is suitable for the mounting of a fixing element on a smooth surface.

So the invention can be used not only with fixing elements of the above kind, but can also be used for example for fixing objects such as conductors having a circular or flat construction or hoses or the like.

Examples thereof are shown in figs 13 to 15.

Fig. 13 and 14 show a conductor 45 fixed by a suitable adhesive to a film 46 corresponding, for example, with the film 2 described above.

Fig. 15 shows a corresponding embodiment where there have been provided various conductors 45' side by side on a film 46.

0176125

-1-

CLAIMS

1. Object to be mounted on a supporting surface, for example a wall, which object is a fixing element, conductor, hose or similar to which is bonded a film protruding from the object and which can be adhered to the supporting surface, characterized in that the film contains openings, pores, recesses or similar, which are suitable for the absorption of adhesive.

2. Object according to claim 1, characterized in that the film is composed of a woven material.

3. Object according to claim 1 or 2, characterized in that the film is composed of a gauze-type material.

4. Object according to one of the above claims, characterized in that the fixing element is cross-shaped.

5. Object according to one of the above claims, characterized in that the fixing element has a first H-shaped section which is attached to the film, while the uppermost sections of the legs of the H-shaped section bound a recess tapering downwards, into which a part of the supporting element with a corresponding shape can be inserted.

6. Object according to one of the above claims, characterized in that the fixing element has a first section attached to a ribbon-like film
and a second section to be joined to this first
section, whereby both sections are connected
together by means of connecting strips formed
during the simultaneous injection moulding of
both parts and easily detachable from the parts.

7. Object according to one of the above claims,
characterized in that the fixing element comprises
a body and a number of pins inserted into the
recesses provided in the body, which pins are
joined to the film with their ends projecting out of
the body and can be moved diagonally across the film
in relation to the body.

8. Object according to claim 7, characterized
in that the body and the pins are manufactured
from one piece and the pins are initially joined
to the body by easily broken connecting parts.

9. Object according to claim 7 or 8, characterized
in that the ends of the pins joined to the
connecting parts are surrounded by a recess provided
in the body, in which several guide ridges for
the pins are arranged.

10. Object according to one of the claims 7-9,
characterized in that projecting ribs are provided
on the external circumference of the pins in
such a way that in the inserted position the pins
are pressed into the recesses provided in the body
by a lightly clamped fit.

11. Object according to one of the above claims,
characterized in that the object is formed by a
longitudinal conductor.

12. Fixing element for the fixing of an object to
a supporting surface, for example a wall or similar,
characterized in that the fixing element is provided
with a body and a number of pins, which can be
inserted parallel into the body into reccesses
provided for this purpose in the body, while suction
caps are fitted to the free ends of the pins.

0176125

FIG.1.

FIG.2.

FIG.3.

0176125

FIG.4.

15 14 16 17

FIG.5.

19 26 22 23 24 18 20 21 27 19

FIG.6.

21 20 25 19 18 19 23 22

FIG.8.

FIG.11.

FIG.10.

FIG.12.

FIG.9.

FIG.7.

45

46

FIG. 13.

45

46

FIG. 14.

45'

46

FIG. 15.

**0176125**
European Patent
Office

**PARTIAL EUROPEAN SEARCH REPORT**
under Rule 46, paragraph 1 of the European Patent
Convention

Application number

EP 85 20 1388

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| D,X | US-A- 2 765 998 (ENGERT)<br><br>* Column 1, line 43 - column 2, line 35; figures 1-3 *<br><br>--- | 1-4 | F 16 B 47/00<br>A 47 G 1/17<br>H 02 G 3/26<br>F 16 L 3/02 |
| A | US-A- 4 029 285 (TENDLER)<br><br>* Column 6, line 57 - column 7, line 34; figures 12,13 *<br><br>--- | 1-3 | |
| A | DE-A- 3 205 540 (STRAHL)<br><br>* Page 3, lines 6-10; figure 10 *<br><br>--- | 4 | |
| X | FR-A- 1 161 556 (POULAIN)<br><br>* Page 1, left-hand column, line 26 - right-hand column, line 17; figures 1-3 *<br><br>--- | 1,11 | |
| D,A | FR-A- 1 117 651 (MATIERE PLASTIQUE)<br>./. | | |

**TECHNICAL FIELDS SEARCHED (Int Cl 4)**

A 47 G
F 16 B
H 02 G

## LACK OF UNITY OF INVENTION

The Search Division considers that the present European patent application does not comply with the requirement of unity of invention and relates to several inventions or groups of inventions namely

1) Claims 1-4,11: Object with a porous fixing film
2) Claim 5: H shaped fixing element with a tapered recess
3) Claim 6: Multipart fixing element connected by strips
4) Claims 7-10: Fixing element with pins connected to the film
5) Claim 12: Fixing element with suction cups on pins

The present partial European search report has been drawn up for those parts of the European patent application which relate to the invention first mentioned in the claims

| Place of search | Date of completion of the search | Examiner |
|---|---|---|
| The Hague | 10-01-1986 | VAN DER WAL |

**European Patent Office**

| | DOCUMENTS CONSIDERED TO BE RELEVANT | | | CLASSIFICATION OF THE APPLICATION (Int Cl 4) |
|---|---|---|---|---|
| Category | Citation of document with indication, where appropriate, of relevant passages | | Relevant to claim | |
| A | FR-A- 2 418 973 (MARANDEAU) | | | |
| A | CH-A- 368 530 (DÄTWYLER) | | | |
| | ------- | | | |

TECHNICAL FIELDS SEARCHED (Int. Cl 4)

EPO Form 1505.3  06.78